# EUROPEAN PATENT APPLICATION

(11) **EP 3 989 016 A1**
(43) Date of publication of application: **27.04.2022**
(21) Application number: 20826884.7
(22) Date of filing: 08.06.2020
(51) Int. Cl.: G05B 19/042

(54) **HOUSEHOLD ELECTRICAL APPLIANCE AND CONTROL METHOD THEREOF**

(30) Priority: 18.06.2019 CN 201910527478
(71) Applicant: Qingdao Haier Washing Machine Co., Ltd., Qingdao, Shandong 266101 (CN); Haier Smart Home Co., Ltd., Qingdao, Shandong 266101 (CN)
(72) Inventor: ZHAO, Zhiqiang, Qingdao, Shandong 266101 (CN); XU, Sheng, Qingdao, Shandong 266101 (CN)
(74) Representative: Jakelski & Althoff Patentanwälte PartG mbB
(86) International application number: PCT/CN2020/094879
(87) International publication number: WO 2020/253563

(57) **Abstract**

The present invention belongs to the field of household appliances, and specifically provides a household electrical appliance and control method thereof. The present invention aims to solve the problem that too many laundry processing programs on the control panels of existing fully automatic clothes washing machines cause inconvenience to the user. To that end, the control method of the present invention comprises the steps: detecting whether a target instruction is received; if said target instruction is received, then causing a display device to switch from a first interface to a second interface; if the target instruction is not received, then causing the display device to maintain the first interface. Desired information is displayed on the second interface. The desired information comprises at least one of local weather information, entertainment information, and commonly executed programs of the household electrical appliance. When the described control method of the present invention is applied to a clothes washing machine, it is possible to cause the second interface to display only the laundry processing programs commonly used by the user, greatly facilitating the operation of the laundry processing device by the user.

## Description

### FIELD OF THE INVENTION

The present disclosure belongs to the field of household appliances, and specifically provides a household appliance and a control method therefor.

### BACKGROUND OF THE INVENTION

With the development of washing technology, fully automatic washing machines are becoming more and more popular. Fully automatic washing machines are usually equipped with several (from eight or nine at least to more than twenty) clothing treatment programs when leaving the factory, so as to meet washing requirements of clothing made of various materials and fabrics.

However, when users are using the washing machine, they often only use two or three of the clothing treatment programs, or only two or three of the clothing treatment programs are used most frequently. For other clothing treatment programs, users either use them very seldom or do not know the specific purposes of them.

Moreover, the provision of numerous clothing treatment programs on a control interface of the washing machine has brought a lot of inconveniences to the user's operations. Especially, the elderly who are not familiar with electronic products do not know how to use them or dare not use them.

Accordingly, there is a need in the art for a new household appliance and a control method therefor to solve the above problem.

### SUMMARY OF THE INVENTION

In order to solve the above problem in the prior art, that is, in order to solve the problem that the provision of too many clothing treatment programs on a control panel of existing fully automatic washing machines has brought inconveniences to the user during use, the present disclosure provides a control method for a household appliance, which includes the following steps: detecting whether a target instruction is received; and switching a display device from a first interface to a second interface if the target instruction is received.

In a preferred technical solution of the above control method, a target button is provided on the household appliance; and the step of "detecting whether the target instruction is received" further includes: detecting whether the target button is selected for operation.

In a preferred technical solution of the above control method, the target button is a mechanical button, or is a virtual button displayed on a touch screen.

In a preferred technical solution of the above control method, the display device is arranged on the household appliance or a mobile terminal device communicatively connected with the household appliance.

In a preferred technical solution of the above control method, the control method further includes the following step: making the display device maintain the first interface if the target instruction is not received.

In a preferred technical solution of the above control method, desired information is displayed on the second interface.

In a preferred technical solution of the above control method, the desired information includes at least one of local weather information, entertainment information, and common execution programs of the household appliance.

In a preferred technical solution of the above control method, the household appliance is a washing machine, a clothing dryer, a washing-drying integrated machine, a dish washing machine, or a shoe washing machine.

In addition, the present disclosure also provides a household appliance, which is provided with a display device and a target button, the target button being arranged to be capable of switching the display device from a first interface to a second interface.

In a preferred technical solution of the above household appliance, the household appliance is a washing machine, a clothing dryer, a washing-drying integrated machine, a dish washing machine, or a shoe washing machine; and/or the target button is a mechanical button, or is a virtual button displayed on a touch screen.

It can be understood by those skilled in the art that in the preferred technical solutions of the present disclosure, by detecting whether the target instruction is received, and switching the display device from the first interface to the second interface if the target instruction is received, the household appliance can display the desired information required by the user, thereby facilitating the user's operations and optimizing the user's experience in use.

Preferably, the desired information includes at least one of local weather information, entertainment information, and common execution programs of the household appliance.

When the above control method of the present disclosure is applied to a washing machine, the second interface can be made display only the clothing treatment programs commonly used by the user, which greatly facilitates the user's operations on a clothing treatment apparatus.

Further, by displaying the first interface and the second interface on the display device separately, the present disclosure not only facilitates the layout of interfaces, but also enables the display screen of the display device to display more content in a limited space.

### BRIEF DESCRIPTION OF DRAWINGS

Hereinafter, preferred embodiments of the present disclosure will be described with reference to the accompanying drawings and in connection with a washing machine. In the drawings:
FIG. 1 is a flow chart illustrating main steps of a control method for a household appliance of the present disclosure;
FIG. 2 is a front view of a washing machine of the present disclosure (a first embodiment);
FIG. 3 is a first interface displayed on the washing machine of the present disclosure (the first embodiment);
FIG. 4 is a second interface displayed on the washing machine of the present disclosure (the first embodiment); and
FIG. 5 is the first interface displayed on the washing machine of the present disclosure (a second embodiment).

### List of reference signs:

1: body; 11: target button; 2: first interface; 3: second interface.

### DETAILED DESCRIPTION OF THE INVENTION

It should be understood by those skilled in the art that the embodiments in this section are only used to explain the technical principles of the present disclosure, and are not used to limit the scope of protection of the present disclosure. For example, although a washing machine is used as an example in the present disclosure to describe the control method for the household appliance of the present disclosure in detail, the control method of the present disclosure can also be applied to any other feasible household appliances, such as a clothing dryer, a washing-drying integrated machine, a dish washing machine, a shoe washing machine, etc. Those skilled in the art can make adjustments as required so as to adapt to specific application occasions, and the adjusted technical solutions will still fall within the scope of protection of the present disclosure.

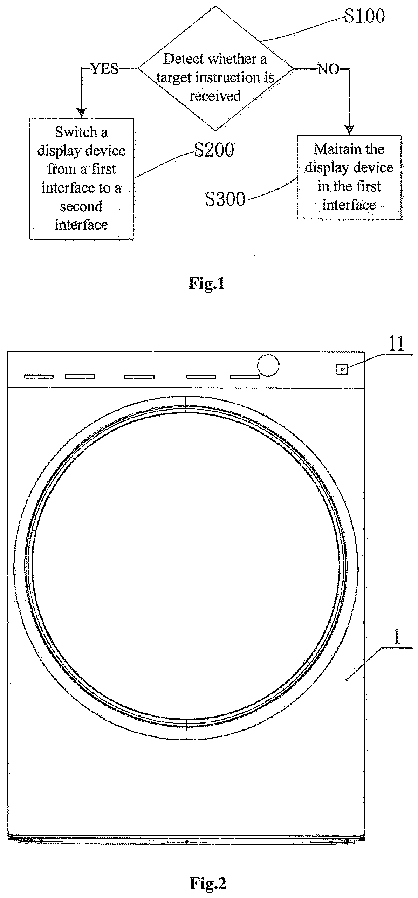

As shown in FIG. 1, the control method of the present disclosure mainly includes the following steps:
Step S100: detecting whether a target instruction is received;
Step S200: switching a display device from a first interface to a second interface if the target instruction is received; and
Step S300: making the display device maintain the first interface if the target instruction is not received.

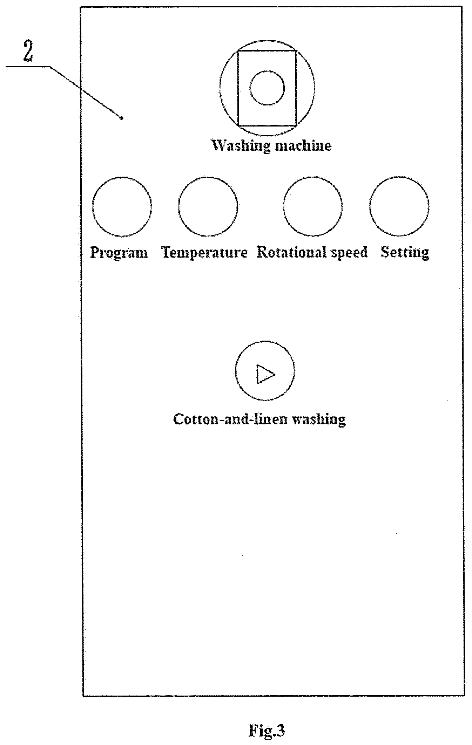

The control method of the present disclosure will be exemplified below in connection with the washing machine shown in FIG. 2 and the interfaces shown in FIGS. 3 to 5.

In a first embodiment of the present disclosure:
as shown in FIG. 2, the washing machine of the present disclosure mainly includes a body 1, a target button 11, a display device (not shown in the figure), and a controller (not shown in the figure), in which the target button 11 and the display device are communicatively connected to the controller respectively.

Preferably, the target button 11 is a mechanical button.

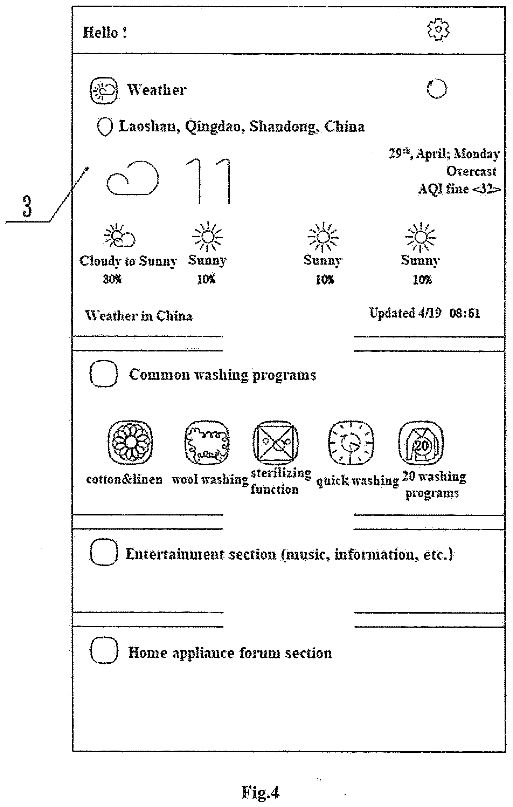

Preferably, the display device of the present disclosure includes a touch screen capable of displaying a first interface 2 shown in FIG. 3 and a second interface 3 shown in FIG. 4.

As shown in FIG. 3, four virtual function keys "program", "temperature", "rotational speed" and "setting" are displayed in the first interface 2. By triggering the "program" button, the user enables the display device to cyclically display all the clothing treatment programs in the first interface 2 (one of the clothing treatment programs is cotton-and-linen washing as shown in FIG. 3); by triggering the "temperature" button, the user enables the washing machine to heat the washing water to a corresponding temperature; by triggering the "rotational speed" button, the user can adjust a rotational speed of a drum (an inner cylinder) of the washing machine; and by triggering the "setting" button, the user can adjust operating parameters of the clothing treatment program displayed in the first interface 2 (such as the cotton-and-linen washing as shown in FIG. 3).

As shown in FIG. 4, desired information that the user expects to obtain is displayed in the second interface 3. The desired information at least includes local weather information as shown in FIG. 4 (such as the weather shown in the second interface 3), common execution programs of the washing machine (such as the common washing programs shown in the second interface 3), entertainment information (such as the entertainment section shown in the second interface 3), and home appliance forum section. The desired information is set by the user in advance according to their own actual needs. After the user has completed the setting, the corresponding desired information will be displayed in the second interface 3. Therefore, the user can make the display device display one, two, three, or any other number of the information in the second interface 3 as required. The common washing programs can also be automatically displayed in the second interface 3 by the washing machine according to the frequency of use by the user. When the user triggers any one of the common washing programs, this program can be executed by the washing machine.

It can be understood by those skilled in the art that the controller and the display device may be devices independent from each other in structure, or may be an integrated device arranged together.

Preferably, in step S100, when a power button on the washing machine is pressed, the display device displays the first interface 2 as shown in FIG. 3, and the controller detects in real time whether the target button 11 is pressed.

Preferably, in step S200, if the controller detects that the target button 11 is pressed, the controller sends a message to the display device to switch the display device from the first interface 2 to the second interface 3 as shown in FIG. 4.

Preferably, in step S300, if the controller does not detect that the target button 11 is pressed, the controller will not send a message to the display device, and the display device will continue to display the first interface 2.

Based on the above description, it can be understood by those skilled in the art that when the user needs to use the washing machine, the user can call out the second interface 3 by operating the target button 11, so as to directly obtain the desired clothing treatment program. As compared with operating the "program" button in the first interface 2 for multiple times, the control method of the present disclosure greatly facilitates the user and optimizes the user's experience in use. In addition, by displaying the first interface 2 and the second interface 3 on the display device separately, the present disclosure not only facilitates the layout of interfaces, but also enables the display screen of the display device to display more content in a limited space.

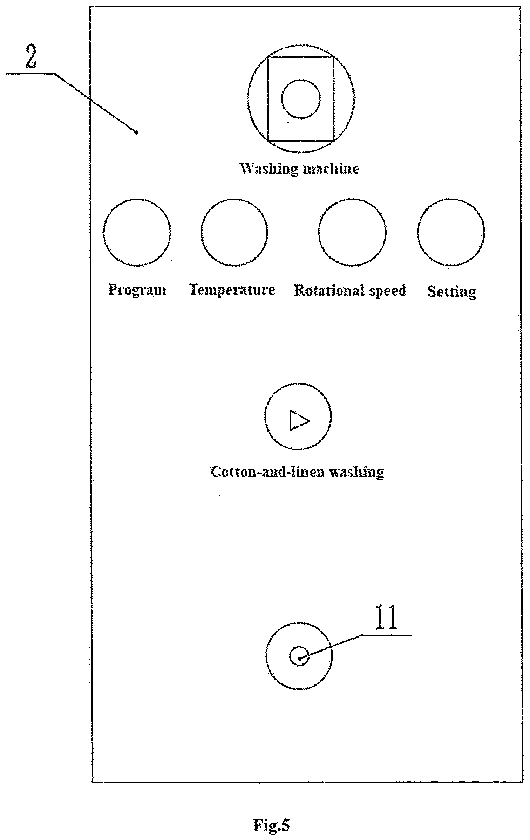

In a second embodiment of the present disclosure:
different from the above first embodiment, the target button 11 is a virtual button displayed on the touch screen; preferably, the virtual button is displayed in the first interface 2 (as shown in FIG. 5).

In a third embodiment of the present disclosure:
different from the above first embodiment, the target button 11 is arranged on a mobile terminal device that is communicatively connected with the washing machine 1. When the mobile terminal device detects that the target button 11 is pressed, the mobile terminal device sends a target instruction to the washing machine 1 (specifically, to the controller). After receiving the target instruction, the controller sends a message to the display device to switch the display device from the first interface 2 to the second interface 3. The mobile terminal device may be a remote control, a mobile phone, a tablet computer, and the like. If the mobile terminal device is a mobile phone, a corresponding APP needs to be installed on the mobile phone, and the target button 11 is a virtual button displayed on an interface of the APP.

In a fourth embodiment of the present disclosure:
different from the above first embodiment, the target button 11 and the display device are both arranged on a mobile terminal device that is communicatively connected with the washing machine 1. When the user selects the clothing treatment program on the mobile terminal device, the mobile terminal device sends an instruction to the washing machine (specifically, to the controller). The controller makes the washing machine execute a corresponding clothing treatment program according to the received instruction. The mobile terminal device may be a mobile phone, a tablet computer, and the like. If the mobile terminal device is a mobile phone, a corresponding APP needs to be installed on the mobile phone, and the target button 11 is a virtual button displayed on an interface of the APP.

Hitherto, the technical solutions of the present disclosure have been described in connection with the preferred embodiments shown in the accompanying drawings, but it is easily understood by those skilled in the art that the scope of protection of the present disclosure is obviously not limited to these specific embodiments. Without departing from the principles of the present disclosure, those skilled in the art can make equivalent changes or replacements to relevant technical features, and all the technical solutions after these changes or replacements will fall within the scope of protection of the present disclosure.

## Claims

1. A control method for a household appliance, the control method comprising the following steps:
detecting whether a target instruction is received; and
switching a display device from a first interface to a second interface if the target instruction is received.

2. The control method according to claim 1, wherein a target button is provided on the household appliance; and
the step of "detecting whether the target instruction is received" further comprises:
detecting whether the target button is selected for operation.

3. The control method according to claim 2, wherein the target button is a mechanical button, or is a virtual button displayed on a touch screen.

4. The control method according to claim 1, wherein the display device is arranged on the household appliance or a mobile terminal device communicatively connected with the household appliance.

5. The control method according to claim 1, wherein the control method further comprises the following step:
making the display device maintain the first interface if the target instruction is not received.

6. The control method according to any one of claims 1 to 5, wherein desired information is displayed on the second interface.

7. The control method according to claim 6, wherein the desired information comprises at least one of local weather information, entertainment information, and common execution programs of the household appliance.

8. The control method according to any one of claims 1 to 5, wherein the household appliance is a washing machine, a clothing dryer, a washing-drying integrated machine, a dish washing machine, or a shoe washing machine.

9. A household appliance, which is provided with a display device and a target button, the target button being arranged to be capable of switching the display device from a first interface to a second interface.

10. The household appliance according to claim 9, wherein the household appliance is a washing machine, a clothing dryer, a washing-drying integrated machine, a dish washing machine, or a shoe washing machine; and/or
the target button is a mechanical button, or is a virtual button displayed on a touch screen.
